# EUROPEAN PATENT APPLICATION

(11) **EP 3 815 943 A1**
(43) Date of publication of application: **05.05.2021**
(21) Application number: 20204006.9
(22) Date of filing: 27.10.2020
(51) Int. Cl.: B60J 11/06

(54) **CAR MAINTENANCE PROTECTION ARRANGEMENT**

(30) Priority: 29.10.2019 FI 20194139 U
(71) Applicant: Go-Parts Oy, 15900 Lahti (FI)
(72) Inventor: VIERTONEN, Jami, 01840 KLAUKKALA (FI)
(74) Representative: Salomäki, Juha Kari Ensio

(57) **Abstract**

A car maintenance protection arrangement comprising one or more protective element (1, 5, 11), which is arranged to be fitted as a cover on the front part of a car in a way where the protective element (1, 5, 11) can be placed on top of the front of the car. The arrangement comprises connecting elements (3, 8, 14) and fasteners (7, 9, 10, 13) for the essentially correct and accurate placement of the protective element (1, 5, 11) where the protective element (1, 5, 11) is arranged to be fitted onto the car by using hook-like, strap-like, or gravity-based fasteners (7, 9, 10, 13) and/or by means of one or more hook-like or strap-like fastener (9, 10) connected to one or more connecting element (3, 8, 14).

## Description

### FIELD OF INVENTION

The invention targets a general arrangement for the protection of a car during maintenance or repair, as specified in the preamble of claim 1.

The invention pertains mainly to the protection of the painted front surfaces, outer surfaces, and other front structures of cars, all-terrain vehicles, and vans during maintenance or repair.

Many car manufacturers have determined standards for the maintenance of their car makes. Service shops servicing such car makes around the world must comply with the standards and instructions issued by the car manufacturers. The instructions used by many car manufacturers specify the use of an external front protection during maintenance. The use of a front protection during maintenance is monitored by car manufacturers and importers at car service stations. The use is controlled by audit visits. Standards thus specify that the front of a car must be protected during the procedure.

There are various front protections and partial covers in common use. Different car models have their own dedicated front protections. There are several car models in existence, which is why car repair shop entrepreneurs and similar service or maintenance businesses may have to acquire different protections for many different cars if they wish to service different makes in compliance with the requirements.

The protections are usually made of some suitably flexible sheet material, such as imitation leather or thick fabric. The material may also have two layers and be made by combining different materials. The protections for different makers differ at least in terms of materials, cutting, and suspension methods.

Model-specific protections are easy to design in a way that fits the model in question, as the protection does not need to be adjustable, and the protection fastening elements may be placed in certain places permanently in a way where they fit each car model. The problem when using model-specific protections is that there are so many car models that it can be very expensive to get all the necessary protections for different models. Furthermore, it can take a lot of working time to fetch, use, and store the various protections at the shop.

There are also universal car front protections, which can be used with many different car models. Their use is often intended as a substitute for the acquisition of several model-specific protections and thereby as a way of saving money. However, such protections have their problems too. Various adjustable protections are known from before and which use various fastening methods whereby the protections can be fastened onto different kinds of cars. When using a universal protection, a technician who services cars by different manufacturers does not have to fetch different protections during the day, which improves the profitability of the service operation by saving time. The problem with the known universal protections however is that they do not fit cars of different models and sizes very well. The covers should settle well on top of the car according to its shape, so that the protection cannot move and cause scratches. This is a problem for smaller cars in particular. The challenge in the design of universal protections is to get the cover to fit well and adjust according to different models. The currently known adjustable protections are thus not very well adaptable to very many different makes and models of car.

The invented protection arrangement is intended as a universal protection which can be adjusted according to the shapes and other features of various different car models. Being essential to universal protections, adjustability sets new demands for the placement of the fastening elements of the cover, as these must fit into the fastening points of many different kinds of cars. In the known universal protections, the placement of the fasteners does not always make it possible to use the cover with many different kinds of cars. It would be advantageous to use movable fastening elements that could be placed differently according to different needs.

### BACKGROUND OF THE INVENTION

Car front protections are car covers designed to be used by technicians to protect the front of a car during maintenance and repair. The purpose of such covers is to create a working environment where it is possible to carry out work tasks near the front of the car without damaging the paint. Front protections are well known in the industry, and their use is required and controlled by many car manufacturers.

Various front protections are known from before, which employ different ways of protecting the front of the car. The protection can be achieved by one or several separate protective parts. There are differences in materials, shapes, and suspension mechanisms as well. Some manufacturers have relied on magnetic attachment, but the development of cars has reduced the availability of magnetic fastening points on cars as plastic and aluminium are being used more.

### PURPOSE OF THE INVENTION

The purpose of this invention is to remove the problems outlined above and to create a front cover that can be used with many different car models and which stays in place reliably, providing good coverage during maintenance or repair.

The intent in this invention is to suspend the car front cover in a novel way to make it fit most new car makes and models. The cover in question uses fasteners attached to hook-and-loop fastener tape, which can be easily placed where they are needed. Such fasteners may be for example various hooks, weights such as sand bags, straps, strips, or cushioning, etc.

What has been presented in the characterization part of claim 1 is characteristic of the invented arrangement. What has been presented in other claims is characteristic of other applications of the invention.

### BRIEF DESCRIPTION OF THE INVENTION

The invention is a car maintenance protection arrangement, which comprises at least a front cover element, which is arranged to protect the front part of a car in a way where the front cover element is on top of the front of the car.

The front cover element is arranged to be fastened onto the car by fastening elements, which may be affixed onto different sections of the upper part of the front protection element. The mentioned fastener elements may be akin to hooks or straps, which are arranged to be fastened onto a hook-and-loop fastener tape that is situated on the top edge of the front protection element. The arrangement further comprises side protection elements, which are placed on top of the side parts of the car front, and the front protection element is fastened onto the side protection elements with hook-and-loop fastener tapes.

### BENEFITS OF THE INVENTION

One of the greatest benefits of the claimed car front maintenance protection arrangement is the fact that the arrangement will significantly facilitate the protection of different kinds of cars during service or repair, because the arrangement is universal and adjustable, and can therefore be used with small cars, all-terrain vehicles, vans, and even light trucks regardless of the make of the vehicle. Thus, the benefit is that the one protective arrangement can be used with many different kinds of cars, which will save costs by removing the need for many different kinds of protections. Working time can also be saved as the technician can focus on car maintenance rather than spending time on fetching different kinds of protections for different models of cars. One further benefit of the invented solution is the quickness and ease with which the maintenance protection can be installed. The profitability of the car service business will improve thanks to the saving in working time spent on other tasks. A further benefit is that protections will be used more as they are easier to use, from which follows the benefit that repair and service shops will receive fewer negative evaluations during audits arranged by car manufacturers or importers. A further benefit is that the protection arrangement sits well on the shape of the car regardless of the model, so that it does not move around, which reduces the possibility of scratches.

### LIST OF FIGURES

The invention is explained in more detail below by an application example and by referring to the appended simplified drawings, where
- figure 1: presents the front protection element according to the invention from the front and in a simplified manner,
- figure 2: presents the front protection element according to figure 1 from behind and in a simplified manner,
- figure 3: presents the side protection element belonging to the invented arrangement from the side and in a simplified manner,
- figure 4: presents the additional side protection element according to the invented arrangement from the side and in a simplified manner,
- figure 5: presents the side view of a car where the side protection elements according to the invention have been fitted on the sides of the front part of the car,
- figure 6: presents the side view of a car where the side protection elements according to the invention have been fitted on the sides of the front part of the car, onto which the front protection element according to the invention has furthermore been fastened, and
- figure 7: presents the side view of a car where the additional side protection elements according to the invention have been fitted on the sides of the front part of the car.

### DETAILED DESCRIPTION OF THE INVENTION

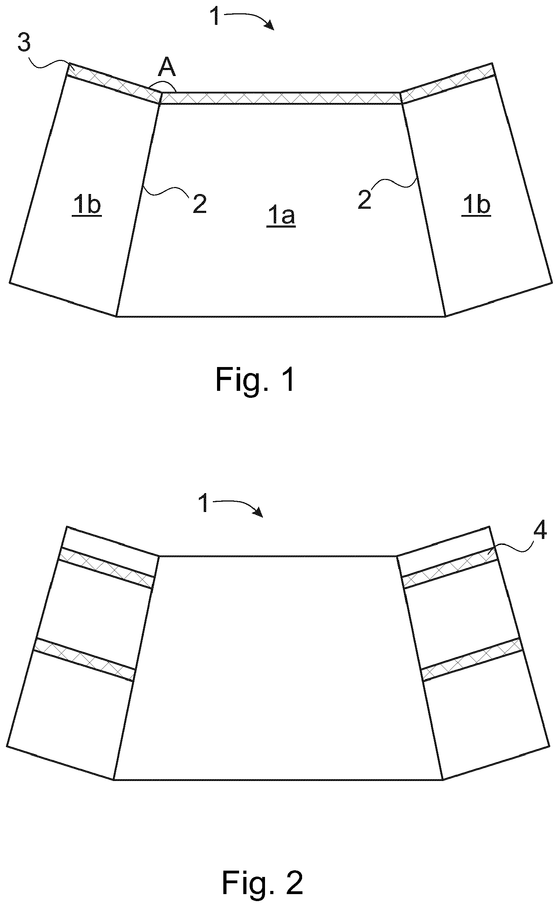

Figure 1 presents a front view and figure 2 a rear view of a front protection element according to the invention where the front side is advantageously made for example of imitation leather and the back side of plastic foam. The front protection element 1 is a covering element comprising a middle part 1a, onto the sides of which the side elements 1b have been sewn. In between the middle part 1a and the side parts 1b, there are the sewing seams 2, where the side parts 1b are easily folded relative to the middle part 1a. The side parts 1b of the front protective element 1a are arranged at a slight angle to the middle part 1a at the seams 2. This triangular structure and design makes the front protective element 1 well-suited for various different kinds of cars. The side elements 1b of the front protection element 1 can be easily folded behind the middle part 1a at the seams 2, if the protection needs for example to be removed from in front of the headlights. The front protection element 1 could alternatively be fitted with nets, flaps that can be opened, or similar elements at the headlights of the car.

The front protection element 1 has been designed and sewn in a way where the side elements 1b are at a suitable angle to the middle part 1a. Thanks to this structure, the front protection element 1 can be fitted on top of the front parts of different cars in a way where it settles and adapts on top of the front part of the car tightly by following the contours of the car body. The angle A of the side elements 1b relative to the middle part 1a is 10 to 40 degrees, suitably 15 to 30 degrees, and advantageously approximately 20 degrees.

There is a hook-and-loop tape strip running essentially the entire width of the element on the upper edge of the front part of the front protection element 1, which acts as a connecting element 3 for the organs responsible for keeping the element in place. There are hook-and-loop tape strips running essentially the entire width of the side elements 1b on the backsides of the front protection element 1 side elements 1b, which act as connecting elements 4, one running vertically to the middle part of each side element 1b, and the others running to the upper part of each side element 1b.

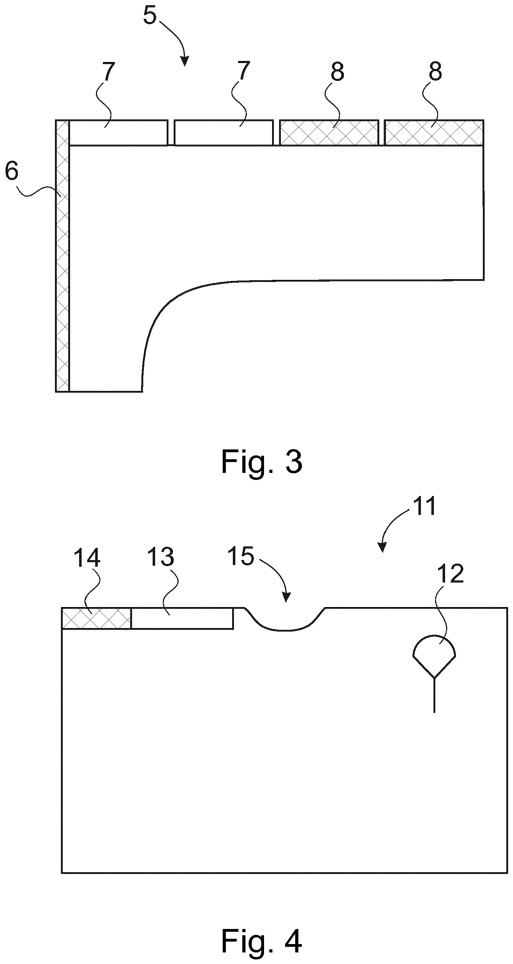

Figure 3 presents a side view of an advantageous side protection element according to the invention, the front side of which is likewise made advantageously for example of imitation leather and the back side of plastic foam. The side protection element 5 has been designed in a way where the lower part of its front part is lower than the lower edge of the back part of the element. The back part of the side protection element 5 then does not continue as low as the front part. The shape of the lower edge of the front part of the side protection element 5 is furthermore curved. Due to this design, the side protection element 5 can be fitted onto the sides of different types and sizes of car to run along the front tyre of the car, and the element will not be in front of the tyre regardless of the size of the car. The front edge of the side protection element 5 comprising the hook-and-loop fastener tape 6 is not necessarily vertical as in figure 3, but can also be arranged at a suitable angle to the vertical direction. This angle is in between for example 0 to 20 degrees.

The side protection element 5 comprises on its front edge a hook-and-loop fastener tape that runs essentially along the entire height of the element and acts as a connecting element 6. There are additionally a group of fasteners 7 one after another in a sideways direction on the upper edge of the side protection element 5. The two fasteners closest to the back edge of the element are equipped with a hook-and-loop fastener tape that acts as a connecting element 8. All or some of the fasteners 7 are equipped with weights by means of which the side protection element 5 is arranged to stay tightly on the side of the car when the fasteners 7 are fitted onto the edges of the opened engine compartment. The weights may consist for example of sand inside the element, which is closed into the element by sewing. Additionally, the other fasteners besides those closest to the back edge may be equipped with hook-and-loop tapes acting as fasteners or similar. Additionally, there is an easily detachable fastener such as a hook on the front part of the side protection element 5.

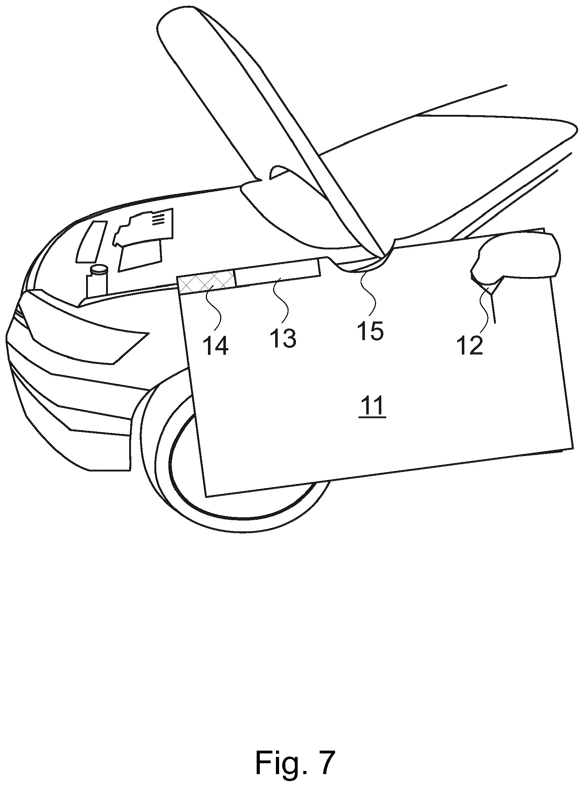

Figure 4 presents a simplified side view of an additional side protection element according to the invented arrangement, the front side of which is likewise made advantageously for example of imitation leather and the back side of plastic foam. The additional side protection element 11 has such a structure and design as allows it to be used together with the side protection element 5 or especially with smaller cars together with the front protection element 1 even without the side protection elements 5. The additional side protection element 11 is very quickly installed onto a car mirror with the fastener hole 12 situated on the back of the element. There is a hook-and-loop tape acting as connecting element 14 on the upper front corner of the additional side protection element 11 and a fastener 13 next to it. There is a detachable fastener, such as a hook, arranged onto the tape 14 on the front part of the additional side protection element 11. The fastener 13 may be for example a sand weight. When using the additional side protection element 11 together with the side protection element 5, it will additionally protect any possible door part on the hinge side, if the technician is for example replacing the windscreen or a wiper blade. The additional side protection element 11 is designed to fit well on different car makes and models either alone or together with the side protection element 5. The additional side protection element 11 is essentially shaped like a rectangle, but there is a recess 15 on its upper edge, essentially in the middle of the element, which makes it possible to better fit the element on the sides of different cars. This is explained in more detail in the explanation to figure 7.

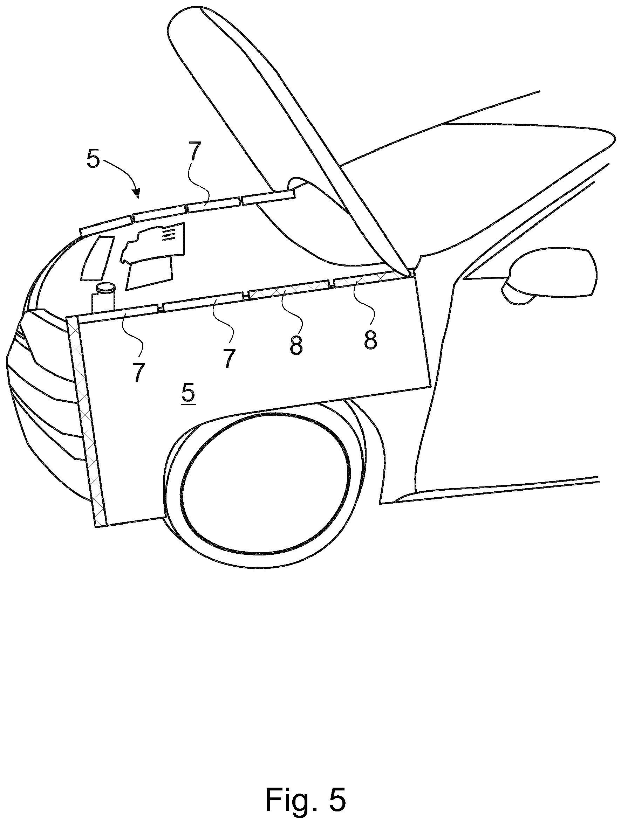

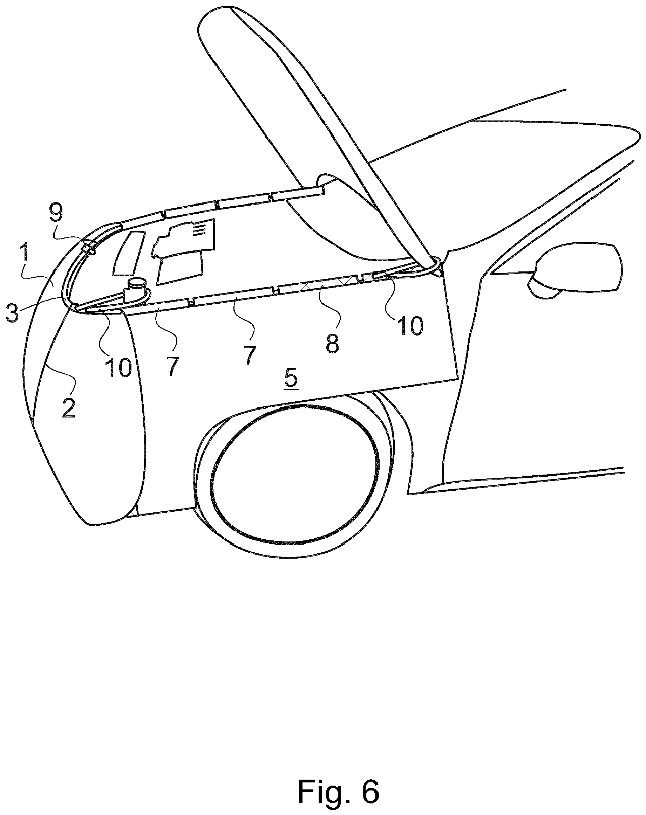

Figure 5 presents the side view of a car on the front sides of which are fitted such side protection elements as are in accordance with the invention, and figure 6 presents the side view of a car on the front sides of which are fitted such side protection elements as are in accordance with the invention, onto which are additionally attached a front protection element according to the invention. The side protection element 5 is fitted on the side of the car according to the wheel well, so that the side protection element 5 sits in the correct position and will not bother the technician during work. The fasteners 7 are fitted on the edge of the open car engine compartment. The fastener closest to the back edge of the element is partly fitted under the edge of the car bonnet, so that the bonnet is keeping the element in place by the back edge of the element. The other fasteners are kept in place on the edge of the engine compartment by their weights. The fasteners 7 are arranged to be folded whereby each fastener can be folded separately for example under the upper edge of the side protection element 5, if it would for example get in the way of some maintenance task. In the case presented in figure 6, the fastener 10 is further fitted onto the side protection element, which is a strap attached onto the hook-and-loop tape 8 and which is arranged to go around the car bonnet support holder.

In the case presented in figure 6, there are further fasteners 9, a hook, and 10, a strap, attached onto the hook-and-loop tape 3 on the upper edge of the side protection element 1. The attachment point and amount for the fasteners 9 and 10 can be chosen freely along the tape 3, meaning that the front protection element 1 can be easily and quickly fastened onto the suitable locations on the front of the car by using said fasteners. Other suitable fasteners can be used as the fasteners 9, such as magnets. The front protection element 1 is attached onto the vertical hook-and-loop tapes 6 on the front edges of the side protection elements 5 by using the hook-and-loop tapes 4 on the back side of the front protection element. The fastening can be done easily and quickly by means of the hook-and-loop tapes whereby the front protection element 1 settles and fits onto the front of the car tightly, meaning that it cannot move around and chafe the surface of the car if the technician for example leans on it while moving. The mutual attachment points of the tapes 4 and 6 can be easily adjusted, due to which the front protection element 1 can be fitted tightly onto differently sized cars without for example any wrinkles forming onto the cover.

Figure 7 presents the side view of a car where an additional side protection element according to the invention has been fitted onto the other front side. The additional side protection element 11 has been attached onto the car side mirror by using the attachment hole 12, and the fastener 13 has been fitted on top of the edge of the car engine compartment. The attachment hole 12 has been formed in a way where the additional side protection element 11 can be easily and sturdily fitted onto the mirror by using the attachment hole 12. Additionally, the additional side protection element 11 can be attached onto the edge of the engine compartment for example by means of a fastener such as a hook, strap, or similar attached to the hook-and-loop strap 14. The recess 15 on the additional side protection element 11 facilitates the fitting of the element onto the sides of the car, because the recess 15 is situated by the bonnet support holder, so that the holder will not disturb the installation of the element.

The connecting elements 3, 4, 6, 8, and 14 and the fasteners 7, 9, 10, and 13 of the invented maintenance protection arrangement are also collectively referred to as equipment for the accurate and correct placement and adjustments of the protective elements 1, 5, and 11. The mentioned equipment may not all be needed, but there may be fewer equipment than what has been mentioned above. Some of the equipment may additionally be loose and attachable onto the desired points on the protective elements 1, 5, and 11, and some of the equipment may be permanently fixed onto the protective elements 1, 5, and 11.

It will be clear to a person skilled in the art that the various applications of this invention are not limited to the examples mentioned above, but may vary within the framework set by the following claims. Thus, the various protective elements of the protective arrangement may for example be different in terms of structure, design, and materials from what has been presented before. The structure of the front protection element may for example be such that it consists of one, two, or four parts instead of three, or similar. The main idea is that the front protection element is easily fitted and settles well onto various cars by following the contours of the car.

It will be also clear to a person skilled in the art that instead of hook-and-loop fastener tapes, some other suitable fasteners may also be used with the protective elements.

## Claims

1. A car maintenance protection arrangement comprising one or more protective element (1, 5, 11), which is arranged to be fitted as a cover on the front part of a car in a way where the protective element (1, 5, 11) can be placed on top of the front of the car, **characterised in that** the arrangement comprises connecting elements (3, 8, 14) and fasteners (7, 9, 10, 13) for the essentially correct and accurate placement of the protective element (1, 5, 11) where the protective element (1, 5, 11) is arranged to be fitted onto the car by using hook-like, strap-like, or gravity-based fasteners (7, 9, 10, 13) and/or by means of one or more hook-like or strap-like fastener (9, 10) connected to one or more connecting element (3, 8, 14).

2. Arrangement according to claim 1, **characterised in that** there is a connecting element (3, 8, 14) on the upper edge of the protective element (1, 5, 11), and **in that** the arrangement comprises fasteners (7, 9, 10, 13) which are akin to hooks, straps, or based on gravity, and by means of which the protective element (1, 5, 11) is arranged to stay in place on top of the front section of the car.

3. Arrangement according to claim 1 or 2, **characterised in that** at least some of the fasteners (7, 9, 10, 13) are loose and incorporate fasteners for the attachment of the fasteners (7, 9, 10, 13) on to the connecting element (3, 8, 14) at the desired location on the top edge of the protective element (1, 5, 11).

4. Arrangement according to claim 1, 2, or 3, **characterised in that** the arrangement comprises a front protective element (1), which consists of a middle part (1a) and two side parts (1b) to the sides of the middle part (1a), whereby there are seams (2) in between the middle part (1a) and the side parts (1b), and where there is a connecting element (3) running essentially along the entire width of the upper edge of the front protection element (1).

5. Arrangement according to any of the preceding claims, **characterised in that** the arrangement comprises side protection elements (5), which are fitted onto the sides of the car front section, and where the front protective element (1) is connected to the side protection elements (5).

6. Arrangement according to claim 5, **characterised in that** the connecting point of the front protection element (1) to the side protection elements (5) is adjustable.

7. Arrangement according to claim 5 or 6, **characterised in that** the side parts (1b) of the front protective element (1) include connecting elements (4) directed to the sides, and where there are connecting elements (6) on the front sections of the side protection elements (5), and where the connecting point of the front protection element (1) to the side protection elements (5) is adjustable by means of the fastening points of these connecting elements (4, 6).

8. Arrangement according to any of the preceding claim, **characterised in that** the connecting elements (3, 4, 6, 8, 14) are hook-and-loop fastener tapes or corresponding fasteners.
